# EUROPEAN PATENT SPECIFICATION

(11) **EP 1 015 214 B1**
(45) Date of publication and mention of the grant of the patent: **31.07.2002**
(21) Application number: 98920812.9
(22) Date of filing: 30.04.1998
(51) Int. Cl.: B29C 39/42, B29C 67/00

(54) **METHOD AND DEVICE FOR MANUFACTURING THREE-DIMENSIONAL BODIES**
VERFAHREN UND GERÄT ZUM HERSTELLEN DREIDIMENSIONALER KÖRPER
PROCEDE ET DISPOSITIF SERVANT A FABRIQUER DES ELEMENTS TRIDIMENSIONNELS

(30) Priority: 30.04.1997 SE 9701663
(43) Date of publication of application: 05.07.2000
(73) Proprietor: SPEEDPART AB, 435 33 Molnlycke (SE)
(72) Inventor: Larsson, Ralf, 435 33 Molnlycke (SE)
(74) Representative: Ekström, Nils
(86) International application number: PCT/SE98/00808
(87) International publication number: WO 98/51464

(56) References cited:
- EP-A- 0 470 705
- FR-A- 2 567 668
- US-A- 5 387 380
- US-A- 5 512 122

## Description

The present invention concerns a method and a device for manufacturing three-dimensional bodies of a great number of mutually connected layers of a particle shaped material, such as a powder, and where the information of the appearance of each layer is achieved from a computer's CAD-unit or similar, according to the pre-characterising part of claim 1 and of claim 5 respetively.

The invention further relates to the use of a building material in the above method and in the above device and to the use of a masking material in said method and in said device.

A method and a device of this type is known from e.g. WO-A-95/18715 or from WO-A-94/15771.

### BACKGROUND AND PROBLEM

Manufacturing of prototypes from originals in form of separate CAD-drawings, where the information from each layer is used for stiffening or melting together material to a threedimensional body, is earlier known. US 4,575,330 describes the use of a UV-laser beam for hardening (stiffening) the surface layer in a reservoir with liquid plastic (photopolymer). In order to be able to build details with thin walls and with high precision the focus point (diameter) of the laser is minimized to fractions of 1 millimeter. The laser beam must illuminate all surfaces which shall become solid. That makes that it takes long time to produce a detail.

In EP-A2 470 705 is described a threedimensional modelling, where the speed has been increased by illuminating the whole surface at one time with a large UV-lamp. The UV-light is shielded with toner from a laser printer on a glass plate. In order to manage details with overhang a support structure is built with the aid of wax, which solidify.

The drawbacks with reactive liquid plastics are that they are dangerous for the personnel and for the environment and that variations of different qualities are limited.

In order to avoid this and the use of a support structure a plastic or wax powder is used , where the unsintered powder bakes in the proceeding layers and in this way supports possible "overhang", such as when a hat on a mushroom is made. These machines, e.g. from the German firm EOS GmbH and the US-firm DTM Inc. use a controllable laser beam to selectively meltening the powder. Such machines constituting the most relevant prior art are described in for example WO-A-95/18715, WO-A-94/15771, WO-A-96/29192, and WO-A-92108592. In order to increase the speed one has on these machines heated the powder reservoir to a temperature just below the melting point of the powder and let the laser beam increase the temperature the degrees that are necessary for melt/sinter together the powder. Despite of that it will take 10-20 hours to manufacture a prototype detail of normal size. Machines based on laser or UV technique are very expensive to buy. The costs are in the order of 3-6 million SEK.

### THE PURPOSE WITH THE INVENTION AND THE SOLUTION OF THE PROBLEM

The object of the present invention is to eliminate the above mentioned drawbacks and to achieve:
- threedimensional bodies, also such with thin walls and with high precision
- articles with overhang without the aid of support structures
- a method which is not dangerous for the personnel and for the environment
- large qualitative possibilities of variations
- a simple, inexpensive and reliable machine equipment
- fast manufacturing of threedimensional bodies

This object is achieved according to the invention by the method as defined in claim 1, by the device as defined in claim 5, by the use of a building material as defined in independent claims 22, 23, 28 and 29 and by the use of a masking material as defined in independent claim 30.

Particular embodiments of the invention are the subject of the respective dependent claims.

As to the method an essentially even particle layer is applied on a support surface, whereby on a masking device is arranged a masking pattern in accordance with the information from the CAD-unit, which masking device is led over said particle layer and close to it, a radiation producer is arranged or is led over the masking device to heat the particles, which are not covered by the masking pattern and exposed for radiation, and thereby the particles are attached to each other by melting or sintering and the masking pattern is removed from the masking device and that new sequences in accordance with the above are carried through until the three-dimensional body is produced.

### DESCRIPTION OF THE DRAWINGS

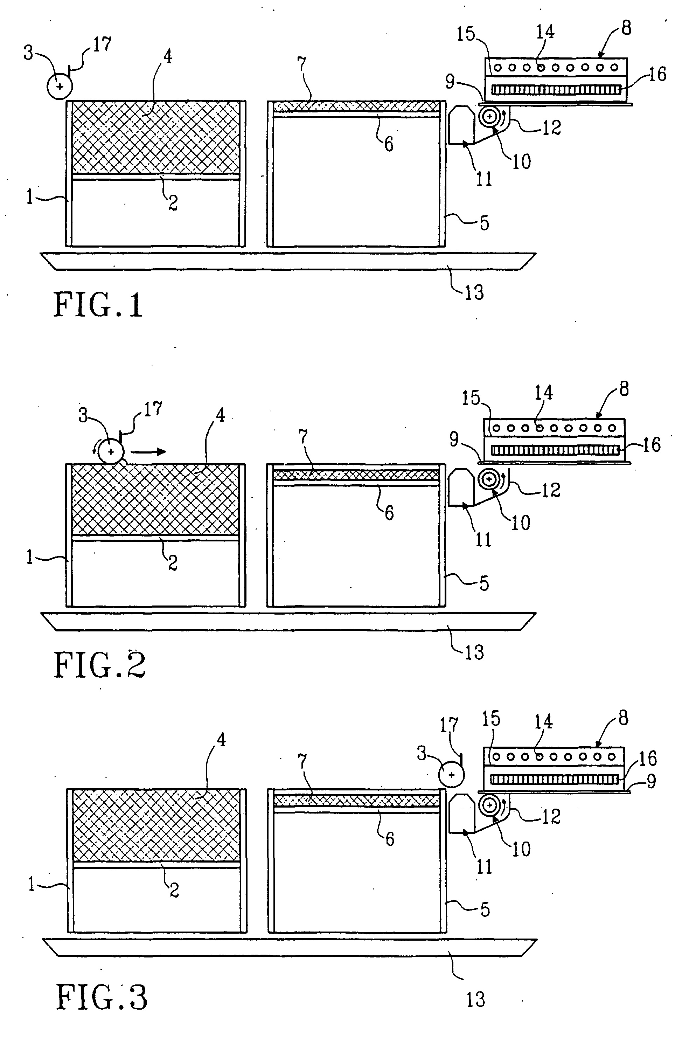

The invention will in the following in more detail be described with reference to the enclosed drawings which show by way of example embodiments of the invention. Figures 1-6 show in sequential step the function of a device, shown in cross-section, for manufacturing of threedimensional bodies in accordance with the invention.

### DESCRIPTION OF AN EMBODIMENT

The inventive idea is to use one for a heat medium, such as IR-radiation, permeable means, on which is applied a temporary, negative masking, which is controlled by a computer and which shields and thereby prevents penetration of the radiation, while free regions permit penetration of radiation to an underlying surface. Which consists of a particle shaped material, e.g. a meltable or sinterable powder. The masking is done with a masking device 9, e.g. a transparent silica plate 9a, on which a developer 11, for instance in the form of a write head, has deposit a masking layer. The masking device is so arranged that either the plate 9a and/or the write head is movable in a longitudinal direction. Conventional toner powder which is used in writers are not suitable as it comprises a thermoplastic adhesive, which would permanently melt and adhere the toner on the plate. An example of an infra-red masking powder 4, which does not melt and adhere, is aluminiumoxide, which has a high meltingpoint and degree of reflexion.
To make it possible to apply the masking powder on the silica plate 9a this can be covered with an electrically conductive but transparent layer, for instance such as is used for shielding of viewing screens and for so called smart windows. Another way is to place a separate conduit behind the silica palate opposite the write head. It is important that the IR-radiation hits the silica plate as parallell as possible, so that the beams do not shine below the masking and cause a bad accuracy. This can be arranged with beams directing means 16, such as a collimator, applied between IR-lamps 14 and the silica plate 9a and which makes the IR-beams parallel. The construction's movements can mechanically be coordinated, for instance can the same movement which transfer the masking device 9 be used to spread and rake out a new powder layer.

The wavelength of the IR-radiation shall be adapted to the emission maximum of the plastic powder, i.e. so that most of the energy is absorbed in the most upper powder layer, which gives a high efficiency, thin layers and short heating time to melt/sinter the powder material. The high absorption admit that one can supply high radiation energy, concentrated to the surface of the powder, which is a condition for fast production of thin layers, before heat spreading through condution and internal transmission radiation destroy the accuracy of the melted layers. Another way or in combination with the above is to increase absorption by choosing a plastic powder which has a large proportion of polar OH-groups or double bonds in the molecular chains. If one chooses IR-radiation in the medium-wave range and with an emission maximum at 860 nanometer the vibration frequency for these atomic bonds coincides with the IR-radiation and a heavy heat release will occur. The powder material can consist of a thermoplastic material, such as nylon, comprising one or several different pigment, e.g. carbon black or a filling agent, which either is dry mixed or mixed during manufacturing before pulverization. The powder can also be provided with additives which increase certain properties, such as reinforcement and be mixed with powders with different melt intervals in order to minimize shrinking when stiffening. The powder can have different particle sizes for increasing the dry volume weight (density) of the powder. High temperature powder, such as ceramics, can be used to increase the strength and possible after sintering in an oven, where the plastic adhesive can be combusted and the hightemperature material can be sintered. The powder material can also have thermo hardening properties, i.e. so that the powder after sintering/melting makes a heat reactive hardener to cross-bind the chains of the plastic molecules. An example of such a plastic can be epoxide with amine hardener. Also an UV-hardener can be added to the powder in order to, at a later occasion, expose the threedimensional body for after hardening by irradiation in lamp- or sunlight.

### DESCRIPTION OF THE FUNCTION

Figure 1 shows a position shortly after the start position, with a filled powder reservoir 1, one in that up and down moveable base 2 and a number of already laid out powder layer 7, which has been transferred to a building reservoir 5, which is provided with a likewise up and down moveable base 6. A masking device 9 and a radiation producer 8 is in parking position.
In figure 2 the base 2 in the powder reservoir 1 has been lifted one step and the base 6 in the building reservoir has been lowered corresponding to the thickness of a powder layer (e.g. 0, 1 mm). A spreader device, e.g. in the form of a wiper roll 3, has been caused to rotate and at the same time it is moved across the powder reservoir 1 while scraping a powder layer. This is transported to a bulling reservoir 5 and is again spread out in a layer. A scraper 17 keeps the roll clean during its rotation.
In figure 3 the wiper roll 3 has laid out a thin, even powder layer above the earlier layer 7. Excess powder falls down on an underlying collecting reservoir 13.

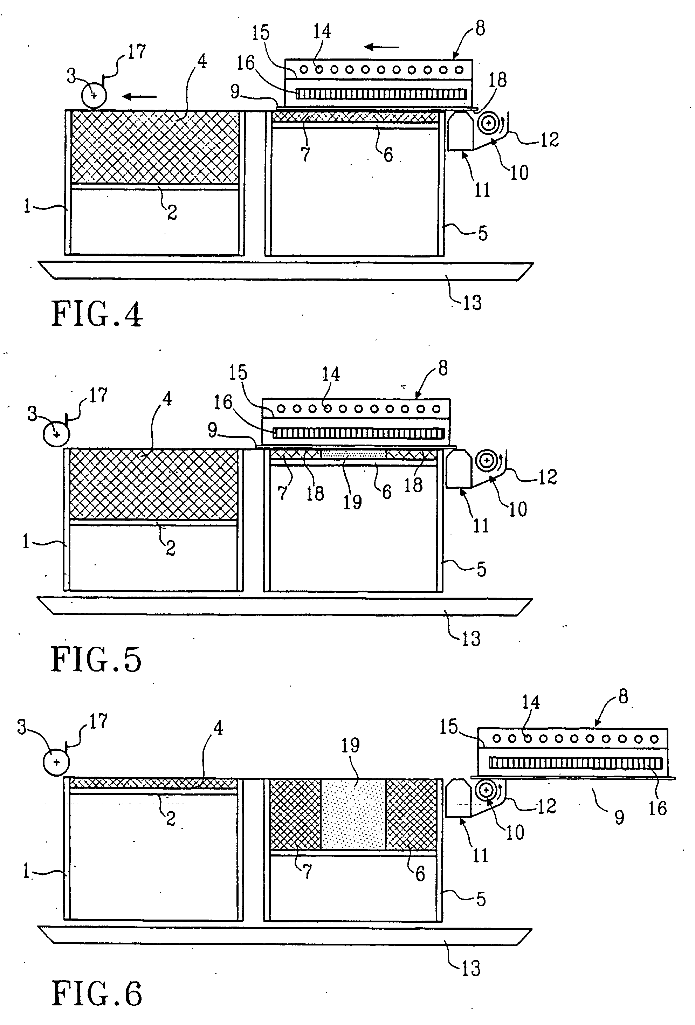

In figure 4 the wiper roll 3 goes back to its start position and at the same time the masking device 9 with the IR-producer 8 moves over a developer 11, which in the shown embodiment is a writer head. That deposits a masking layer of for instance aluminia powder in accordance with information received from a not closer shown computer's CAD-unit on the masking device, which can be a glass plate.
Figure 5 shows the melting phase, during which a shielding device 15, for instance in the form of a Venetian blind, is open and allows the IR-radiation from the ignited IR-lamps to pass. The IR-beams are directed -made parallel- with a collimator 16 and thereafter pass those parts of the glass plate which are not covered by the masking pattern 18. Thereby the exposed parts of the powder layer 7 are melted to an interconnected structure 1 9.

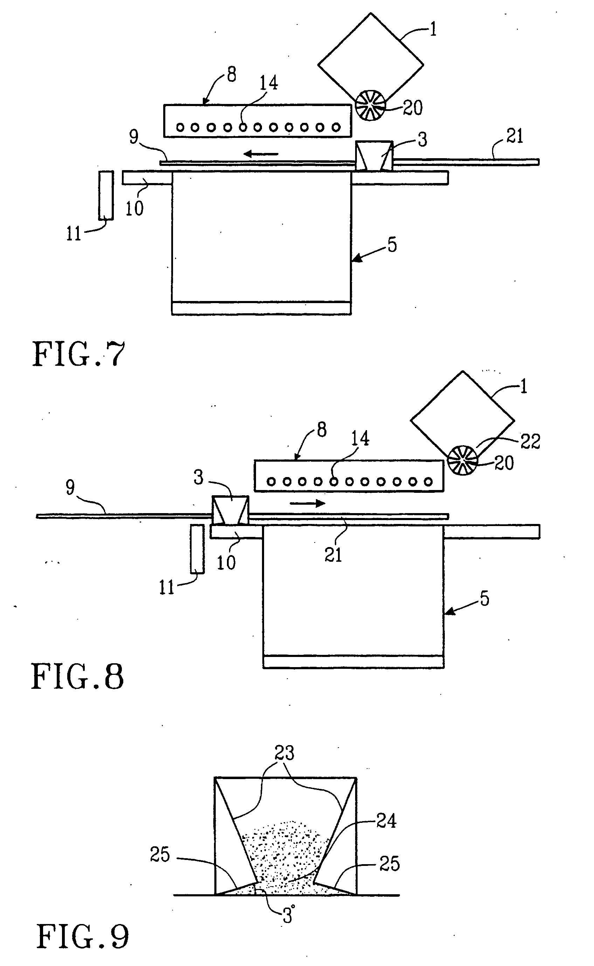

Figure 6 shows a finished threedimensional body 19 after a lot of repeated applying sequences before the surrounding loose particle shaped material has been removed.
In the embodiment shown in figures 7 and 8 the powder reservoir 1 or the powder magazine is arranged obliquely above the building reservoir 5 and is in the shown embodiment a transport package, which rest on one of its borders, in which corner part an outlet port is arranged. The inclined V-base of the package lead to that the content without extra measures is emptied out. In connection with the outlet port is arranged a dosing device 20, which in active position delivers powder to one below that located spreading device 3. This is in this embodiment a wiper tray, which is horizontally displaceable over the building reservoir 5. The wiper tray 3 is on one of its side connected with the glass plate on the masking device 9 and on its opposite side possibly connected with a compression plate 2 1.

Figure 7 shows a start position, in which the wiper tray 3 is in a position for fetching a certain amount of powder, which during the tray's displacement movement to the opposite end of the building reservoir 5 is applied in an even layer. During this movement the glass plate 9 passes the developer 11, which for instance through electrostatical electrification projects a masking pattern on the glass plate in form of a negative picture of that surface section through the threedimensional body which should be manufactured
When the wiper tray is in its other end position the compression plate will be located right over the newly laid out powder layer 7. In this position the powder layer is moved upwards against the compression plate 2 1, whereby an even layer of uniform thickness is obtained. In this position the tray can emit possible excess powder to the eliminator 10.
When the wiper tray is back in its start position the glass plate 9 is in exact position over the building reservoir 5 and the melting phase can start. The IR-lamps 14 can in this embodiment be secured right opposite and above the building reservoir 5.

## Claims

1. A method for producing three-dimensional bodies of a large number of mutually connected layers of a particle shaped building material, such as a powder, and where the information of the appearance of each layer is achieved from a computer's CAD-unit or similar,
in which essentially even particle layer (7) of building material is applied on a support base (6), **characterized in that** on a masking device (9) is arranged a masking pattern in accordance with the information from the CAD-unit, which masking device is led over said particle layer and close to it,
that a radiation producer (8) is arranged or is led over the masking device (9) to heat the particles, which are not covered by the masking pattern and exposed for radiation, and thereby the particles are attached to each other by melting or sintering, and
that the masking pattern is removed from the masking device, and **in that** new sequences in accordance with the above are carried through until the three-dimensional body (1 9) is produced.

2. A method according to claim 1,
**characterized in**
**that** the particle layer (7) is applied with the aid of a spreading device (3), e.g. a wiper roll, which transfers the particles from a reservoir (1) and spread them over the support base (6).

3. A method according to claim 1,
**characterized in**
**that** during movement of the masking device (9) from a parking position beside the support base (6) to an active position over the support base the masking device passes one to the CAD-unit connected computer controlled developer (11), which produces an electrostatical pattern of the layer in question in the form of a layer of masking powder on the support base.

4. A method according to claim 1,
**characterized in**
**that** one to the CAD-unit connected computer controlled developer (1 1) is moved over the support base (6), whereby an electrostatical pattern of the layer in question in the form of a layer of masking powder is produced.

5. A device for producing three-dimensional bodies of a large number of mutually connectable layers of a particle shaped building material, e.g. a powder, and where the information about each layer's appearance is achieved from an original, for instance from a computer's CAD-unit or similar,
in which a spreading device (3) is arranged to distribute an essentially even particle layer (7) on a support base (6), **characterized in that**
a developer (11) is arranged to generate or apply a masking pattern in accordance with the original, e.g. information from the CAD-unit, on a masking device,
that a radiation producer (8) is arranged over the masking device (9) to heat the particles, which are not covered by the masking pattern and exposed for radiation, and thereby the particles are connected to each other by melting or sintering, and
**in that** an eliminator (1 0) is arranged to remove the existing masking pattern on the masking device (9).

6. A device according to claim 5,
**characterized in**
**that** the spreading device (3) includes a wiper roll, a wiper tray or similar, which is arranged to transport the particles from a powder reservoir (1) and spread the particles in an even layer all over the support base (6).

7. A device in accordance with claim 5,
**characterized in**
**that** the powder reservoir (1) is a transport package, which at least during the feeding out of the powder is arranged over the support base (6), that in the bottom of the package is arranged an outlet opening (22) and in connection to that a dosing device (20) for the powder, and that the spreading device (3) and/or the support base are moveable in relation to each other.

8. A device in accordance with claim 5,
**characterized in**
**that** the spreading device (3) is one over the support base (6) and the powder layer (7) respectively moveable powder reservoir, which is arranged to meter and spread out via at least one outlet opening (24) a new powder layer in at least one direction of motion.

9. A device in accordance with claim 8,
**characterized in**
**that** the inside of the wiper tray (3) in the form of a transport package has inwards inclined side walls (23) and
**that** guiding plates (25) at the outlet opening (24) of the wiper tray are arranged in the direction of motion of the tray, which guiding plates are arranged to make an acute angle against the support base (6) for compression of the powder layer in connection with or after the spreading.

10. A device in accordance with claim 5,
**characterized in**
**that** the powder layer (7) and a compression plate (21) are arranged moveable in relation to each other and arranged to be pressed in contact with one another.

11. A device in accordance with claim 10,
**characterized in**
**that** the compression plate (21) is arranged as a cooling member for cooling the powder layer (7).

12. A device in accordance with claim 5,
**characterized in**
**that** the spreading device (3) is one over the powder layer (7) moveable, rotateable powder roll, whose rotation of speed and direction of motion are adjustable.

13. A device in accordance with claim 6,
**characterized in**
**that** the powder reservoir (1) is provided with an up and down moveable base (2), which when producing each layer is arranged to lift up the powder mass (4) in the powder reservoir corresponding to the thickness or the volume of a layer, and that the support base (6) is an up and down moveable bottom of a building reservoir (5), which when producing each layer is arranged
to lower the bottom (4) in the building reservoir corresponding to the thickness or the volume of a layer.

14. A device in accordance with claim 13,
**characterized in**
**that** the walls of the building reservoir (5) are made of melted or sintered powder, layer by layer, in the same way as the threedimensional body (19), that the walls are fastened to the moveable base plate (6), and that the walls of the building reservoir (5) are generated by a fix or by means of the masking device controlled IR-radiation transparent pattern.

15. A device in accordance with claim 5,
**characterized in**
**that** the radiation producer (8) comprises a collimator (1 6), which is made of lamellas preferably in at least two different crossing planes above each other, altermatively in combination with a spreading device (1 5).

16. A method in accordance with claim 1,
**characterized in**
**that** the powder is preheated to a temperature which is lower than the sintering or melting temperature.

17. A method in accordance with claim 16,
**characterized in**
**that** the powder is preheated with the aid of infrared radiation member (14) with lower intensity than during sintering.

18. A method in accordance with claim 17,
**characterized in**
**that** the powder is preheated by means of using a masking layer being partly transparent.

19. A device in accordance with claim 5,
**characterized in**
**that** the device includes a partly transparent masking layer.

20. A device in accordance with claim 5,
**characterized in**
**that** the masking device (9) comprises a writer unit, a developer, and a flowing crystal display or similar for production of the desired masking pattern.

21. A device in accordance with claim 5,
**characterized in**
**that** the masking device (9) is a disconnectable and connectable mirror, which is designed to take at the same time two different states, one in which the mirror is reflecting and another in which it is transparent, and that said states are controllable with information from a CAD-unit in correspondence to a desired masking pattern.

22. Use of a building material in the method of claim 1 and/or the device of claim 5,
wherein
the building material during sintering or melting or hardening is arranged to expand, for instance by the aid of an expanding agent which sets free a gas, and thereby compensates the resulting three-dimensional body (1 9) for thermal or chemical shrinking.

23. Use of a building material in the method of claim 1 and/or the device of claim 5
wherein
the building material consists of a particle, fiber or ball-shaped core with higher melt temperature than its surface, which is covered with a thin melt- or hardenable layer.

24. A device in accordance with claim 5,
**characterized in**
**that** the developer (1 1) is arranged to cooperate with a transparent plate (9), on which a layer of masking powder is applied electrostatically.

25. A device in accordance with claim 5,
**characterized in**
**that** the developer (1 1) comprises one in or on a transparent plate (9) arranged electrode matrix with a large number of preferably annular-shaped control electrodes, which electrode matrix on one side is provided with a background electrode and which opposite side is turned towards a dosing device for masking material, and that the potentials applied on the control electrodes are variable in accordance with information from the computer's CAD-unit.

26. A device in accordance with claim 5,
**characterized in**
**that** the eliminator (3) is a cleaning device, which is arranged to clean the transparent layer from the masking material forming the masking layer, whereby possible excess material preferably can be returned to the masking device.

27. A device in accordance with claim 26,
**characterized in**
**that** the eliminator (10) is arranged to change the state of voltage in the display so that the masking pattern is erased.

28. Use of a building material in the method of claim 1 and/or the device of claim 5,
wherein
the building material consists of a grain-shaped melt- and/or sinterable material, for instance a thermoplastic, such as nylon, provided with a carbon based pigment powder with high absorption within the IR-range.

29. Use of a building material in the method of claim 1 and/or the device of claim 5,
wherein
the building material has a large proportion of polar OH-groups or double bonds in the molecular chaines.

30. Use of a masking material in the method of claim 1 and/or the device of claim 5,
wherein
the masking material consists of a masking powder, oxide of aluminum for instance, with high melttemperature and degree of reflection.

## Patentansprüche

1. Verfahren zur Herstellung dreidimensionaler Körper einer großen Anzahl miteinander verbundener Schichten eines teilchenförmigen Baumaterials, wie beispielsweise Pulver, bei dem die Informationen über das Aussehen jeder Schicht von einer Computer-CAD-Einheit oder dergleichen erlangt werden und bei dem eine im wesentlichen gleichmäßige Teilchenschicht (7) Baumaterial auf eine Trägerbasis (6) aufgebracht wird,
**dadurch gekennzeichnet,**
**dass** ein Maskenmuster entsprechend den Informationen von der CAD-Einheit auf einem Maskenapparat (9) angeordnet ist, wobei der Maskenapparat über die Teilchenschicht und nahe zu ihr gelegt wird,
**dass** ein Strahlungsgenerator (8) über den Maskenapparat (9) angeordnet oder gelegt wird, um die Teilchen zu erwärmen, die nicht durch das Maskenmuster abgedeckt sind und zur Bestrahlung frei liegen, und dadurch die Teilchen durch Schmelzen oder Sintern aneinander gebunden werden, und
**dass** das Maskenmuster von dem Maskenapparat entfernt wird, und dass neue Abfolgen gemäß oben durchgeführt werden bis der dreidimensionale Körper (19) hergestellt ist.

2. Verfahren nach Anspruch 1,
**dadurch gekennzeichnet,**
**dass** die Teilchenschicht (7) mittels einer Streuvorrichtung (3) wie zum Beispiel einer Abstreifwalze aufgebracht wird, welche die Teilchen von einem Vorratsbehälter (1) überträgt und sie über die Trägerbasis (6) streut.

3. Verfahren nach Anspruch 1,
**dadurch gekennzeichnet,**
**dass** der Maskenapparat während der Bewegung des Maskenapparats (9) von einer Parkstellung neben der Trägerbasis (6) zu einer aktiven Stellung über der Trägerbasis einen mit der CAD-Einheit verbundenen, computer-gesteuerten Entwickler (11) passiert, der ein elektrostatisches Muster der in Frage stehenden Schicht in Form einer Schicht Maskenpulver auf der Trägerbasis erzeugt.

4. Verfahren nach Anspruch 1,
**dadurch gekennzeichnet,**
**dass** ein mit der CAD-Einheit verbundener, computer-gesteuerter Entwickler (11) über die Trägerbasis (6) bewegt wird, wodurch ein elektrostatisches Muster der in Frage stehenden Schicht in Form einer Schicht Maskenpulver erzeugt wird.

5. Vorrichtung zur Herstellung dreidimensionaler Körper einer großen Anzahl miteinander verbindbarer Schichten eines teilchenförmigen Baumaterials, wie beispielsweise Pulver, bei der die Informationen über das Aussehen jeder Schicht von einem Original zum Beispiel von einer Computer-CAD-Einheit oder dergleichen erlangt werden und bei der eine Streuvorrichtung (3) angeordnet ist, um eine im wesentlichen gleichmäßige Teilchenschicht (7) auf einer Trägerbasis (6) zu verteilen,
**dadurch gekennzeichnet,**
**dass** ein Entwickler (11) angeordnet ist, um ein Maskenmuster entsprechend dem Original, wie zum Beispiel den Informationen von der CAD-Einheit, auf einem Maskenapparat (9) zu erzeugen oder aufzubringen,
**dass** ein Strahlungsgenerator (8) über dem Maskenapparat (9) angeordnet ist, um die Teilchen zu erwärmen, die nicht durch das Maskenmuster abgedeckt sind und zur Bestrahlung frei liegen, und dadurch die Teilchen durch Schmelzen oder Sintern aneinander gebunden werden, und
**dass** eine Beseitigungsvorrichtung (10) angeordnet ist, um das vorhandene Maskenmuster an dem Maskenapparat zu entfernen.

6. Vorrichtung nach Anspruch 5,
**dadurch gekennzeichnet,**
**dass** die Streuvorrichtung (3) eine Abstreifwalze, eine Abstreifwanne oder dergleichen ist, die angeordnet ist, um die Teilchen von einem Pulvervorratsbehälter (1) zu transportieren und die Teilchen in einer gleichmäßigen Schicht über die gesamte Trägerbasis (6) zu verstreuen.

7. Vorrichtung nach Anspruch 5,
**dadurch gekennzeichnet,**
**dass** der Pulvervorratsbehälter (1) eine Transportpackung ist, die wenigstens während des Ausgebens des Pulvers über der Trägerbasis (6) angeordnet ist, dass im Boden der Packung eine Auslassöffnung (22) und damit verbunden eine Dosiervorrichtung (20) für das Pulver angeordnet sind, und dass die Streuvorrichtung (3) und/oder die Trägerbasis relativ zueinander bewegbar sind.

8. Vorrichtung nach Anspruch 5,
**dadurch gekennzeichnet,**
**dass** die Streuvorrichtung (3) ein über der Trägerbasis (6) bzw. der Pulverschicht (7) bewegbarer Pulvervorratsbehälter ist, der derart angeordnet ist, dass er über wenigstens eine Auslassöffnung (24) eine neue Pulverschicht in wenigstens eine Bewegungsrichtung zumisst und ausstreut.

9. Vorrichtung nach Anspruch 8,
**dadurch gekennzeichnet,**
**dass** das Innere der Abstreifwanne (3) in der Form einer Transportpackung nach innen geneigte Seitenwände (23) aufweist, und dass Führungsplatten (25) an der Auslassöffnung (24) der Abstreifwanne in der Bewegungsrichtung der Wanne angeordnet sind, wobei die Führungsplatten derart angeordnet sind, dass sie zum Zusammendrücken der Pulverschicht zusammen mit oder nach dem Streuen einen spitzen Winkel gegen die Trägerbasis (6) bilden.

10. Vorrichtung nach Anspruch 5,
**dadurch gekennzeichnet,**
**dass** die Pulverschicht (7) und eine Druckplatte (21) relativ zueinander bewegbar und derart angeordnet sind, dass sie miteinander in Kontakt gedrückt werden.

11. Vorrichtung nach Anspruch 10,
**dadurch gekennzeichnet,**
**dass** die Druckplatte (21) als Kühlelement zum Kühlen der Pulverschicht (7) ausgebildet ist.

12. Vorrichtung nach Anspruch 5,
**dadurch gekennzeichnet,**
**dass** die Streuvorrichtung (3) eine über der Pulverschicht (7) bewegbare, drehbare Pulverwalze ist, deren Drehgeschwindigkeit und Bewegungsrichtung einstellbar sind.

13. Vorrichtung nach Anspruch 6,
**dadurch gekennzeichnet,**
**dass** der Pulvervorratsbehälter (1) mit einer nach oben und unten bewegbaren Basis (2) versehen ist, die beim Herstellen jeder Schicht angeordnet ist, um die der Dicke oder dem Volumen einer Schicht entsprechende Pulvermasse (4) in dem Pulvervorratsbehälter anhebt, und dass die Trägerbasis (6) ein nach oben und unten bewegbarer Boden eines Aufbaubehälters (5) ist, der beim Herstellen jeder Schicht angeordnet ist, um den Boden (4) in dem Aufbaubehälter entsprechend der Dicke oder dem Volumen einer Schicht abzusenken.

14. Vorrichtung nach Anspruch 13,
**dadurch gekennzeichnet,**
**dass** die Wände des Aufbaubehälters (5) in der gleichen Weise wie der dreidimensionale Körper schichtweise aus geschmolzenem oder gesintertem Pulver gefertigt sind, dass die Wände an der bewegbaren Basisplatte (6) befestigt sind, und dass die Wände des Aufbaubehälters (5) durch eine Klemme oder mittels des durch den Maskenapparat gesteuerten, für IR-Strahlung durchlässigen Musters erzeugt werden.

15. Vorrichtung nach Anspruch 5,
**dadurch gekennzeichnet,**
**dass** der Strahlungsgenerator (8) einen Kollimator (16), der aus Lamellen vorzugsweise in wenigstens zwei unterschiedlichen Kreuzungsebenen übereinander gefertigt ist, alternativ in Kombination mit einer Streuvorrichtung (15) aufweist.

16. Verfahren nach Anspruch 1,
**dadurch gekennzeichnet,**
**dass** das Pulver auf eine Temperatur vorerwärmt wird, die niedriger als die Sinteroder Schmelztemperatur ist.

17. Verfahren nach Anspruch 16,
**dadurch gekennzeichnet,**
**dass** das Pulver mittels eines Infrarotstrahlungselements (14) mit geringerer Intensität als während des Sinterns vorerwärmt wird.

18. Verfahren nach Anspruch 17,
**dadurch gekennzeichnet,**
**dass** das Pulver unter Verwendung einer Maskenschicht, die teilweise transparent ist, vorerwärmt wird.

19. Vorrichtung nach Anspruch 5,
**dadurch gekennzeichnet,**
**dass** die Vorrichtung eine teilweise transparente Maskenschicht enthält.

20. Vorrichtung nach Anspruch 5,
**dadurch gekennzeichnet,**
**dass** der Maskenapparat (9) eine Schreibeinheit, einen Entwickler und eine Flüssigkristallanzeige oder dergleichen zur Herstellung des gewünschten Maskenmusters aufweist.

21. Vorrichtung nach Anspruch 5,
**dadurch gekennzeichnet,**
**dass** der Maskenapparat (9) ein trennbarer und verbindbarer Spiegel ist, der derart ausgebildet ist, dass er zur gleichen Zeit zwei unterschiedliche Zustände annimmt, einen, in dem der Spiegel reflektierend ist, und einen anderen, in dem er durchlässig ist, und dass die Zustände mit Informationen von einer CAD-Einheit entsprechend einem gewünschten Maskenmuster steuerbar sind.

22. Verwendung eines Baumaterials in dem Verfahren von Anspruch 1 und/oder der Vorrichtung von Anspruch 5, wobei das Baumaterial während des Sinterns oder Schmelzens oder Härtens derart angeordnet ist, dass es sich zum Beispiel mittels eines Treibmittels, welches ein Gas freisetzt, ausdehnt, und dadurch den resultierenden dreidimensionalen Körper (19) für thermisches oder chemisches Schrumpfen ausgleicht.

23. Verwendung eines Baumaterials in dem Verfahren von Anspruch 1 und/oder der Vorrichtung von Anspruch 5, wobei das Baumaterial aus einem teilchen-, faser- oder kugelförmigen Kern mit höherer Schmelztemperatur als seine Oberfläche besteht, der mit einer dünnen schmelz- oder härtbaren Schicht überdeckt ist.

24. Vorrichtung nach Anspruch 5,
**dadurch gekennzeichnet,**
**dass** der Entwickler (11) derart angeordnet ist, dass er mit einer transparenten Platte (9) zusammenwirkt, auf der eine Schicht Maskenpulver elektrostatisch aufgebracht ist.

25. Vorrichtung nach Anspruch 5,
**dadurch gekennzeichnet,**
**dass** der Entwickler (11) eine in oder an einer transparenten Platte (9) angeordnete Elektrodenmatrix mit einer großen Anzahl vorzugsweise ringförmiger Steuerelektroden aufweist, wobei die Elektrodenmatrix an einer Seite mit einer Hintergrundelektrode versehen ist und deren abgewandte Seite einer Dosiervorrichtung für das Maskenmaterial zugekehrt ist, und dass die an die Steuerelektroden angelegten Potentiale entsprechend den Informationen von der Computer-CAD-Einheit variabel sind.

26. Vorrichtung nach Anspruch 5,
**dadurch gekennzeichnet,**
**dass** die Beseitigungsvorrichtung (3) eine Reinigungsvorrichtung ist, die derart angeordnet ist, dass sie die transparente Schicht von dem die Maskenschicht bildenden Maskenmaterial säubert, wodurch mögliches überschüssiges Material vorzugsweise zu dem Maskenapparat zurückgebracht werden kann.

27. Vorrichtung nach Anspruch 26,
**dadurch gekennzeichnet,**
**dass** die Beseitigungsvorrichtung (10) so angeordnet ist, dass sie den Spannungszustand in der Anzeige verändert, so dass das Maskenmuster gelöscht wird.

28. Verwendung eines Baumaterials in dem Verfahren von Anspruch 1 und/oder der Vorrichtung von Anspruch 5, wobei das Baumaterial aus einem körnigen, schmelzund/oder sinterbaren Material besteht, wie zum Beispiel einem thermoplastischen Kunstharz wie beispielsweise Nylon, versehen mit einem Pigmentpulver auf Kohlenstoffbasis mit hohem Absorptionsvermögen im IR-Bereich.

29. Verwendung eines Baumaterials in dem Verfahren von Anspruch 1 und/oder der Vorrichtung von Anspruch 5, wobei das Baumaterial einen großen Anteil polarer OH-Gruppen oder Doppelbindungen in den Molekülketten besitzt.

30. Verwendung eines Maskenmaterials in dem Verfahren von Anspruch 1 und/oder der Vorrichtung von Anspruch 5, wobei das Maskenmaterial aus einem Maskenpulver wie zum Beispiel Aluminiumoxid mit einer hohen Schmelztemperatur und einem hohen Reflexionsgrad besteht.

## Revendications

1. Procédé de production d'éléments tridimensionnels constitués d'un grand nombre de couches mutuellement reliées constituées d'un matériau de construction en forme de particules, tel qu'une poudre, et où les informations concemant l'aspect de chaque couche sont obtenues à partir d'une unité de Conception Assistée par Ordinateur (CAO) ou similaire,
dans lequel une couche de particules sensiblement régulière (7) de matériau de construction est appliquée sur une base de support (6), **caractérisé en ce que** sur un dispositif de masquage (9) est agencé un motif de masquage conforme aux informations provenant de l'unité de CAO, lequel dispositif de masquage est amené au-dessus de ladite couche de particules et à proximité de celle-ci, un producteur de rayonnement (8) étant agencé ou étant amené sur le dispositif de masquage (9) pour chauffer les particules qui ne sont pas recouvertes par le motif de masquage et exposées au rayonnement, et par conséquent les particules sont reliées les unes aux autres par fusion ou frittage, et
**en ce que** le motif de masquage est enlevé du dispositif de masquage et **en ce que** de nouvelles séquences conformes à ce qui précède sont effectuées jusqu'à ce que le corps tridimensionnel (19) soit produit.

2. Procédé selon la revendication 1, **caractérisé en ce que** la couche de particules (7) est appliquée à l'aide d'un dispositif de dispersion (3), par exemple un rouleau de balayage, qui transfère les particules depuis un réservoir (1) et les disperse sur la base de support (6).

3. Procédé selon la revendication 1, **caractérisé en ce que** pendant le déplacement du dispositif de masquage (9) depuis une position de stationnement située à côté de la base de support (6) vers une position active sur la base de support, le dispositif de masquage passe devant un développeur (11) commandé par ordinateur relié à l'unité de CAO, qui produit un motif électrostatique de la couche en question sous la forme d'une couche de poudre de masquage sur la base de support.

4. Procédé selon la revendication 1, **caractérisé en ce qu'**un développeur (11) commandé par ordinateur relié à l'unité de CAO est déplacé sur la base de support (6), de sorte qu'un motif électrostatique de la couche en question ayant la forme d'une couche de poudre de masquage est produit.

5. Dispositif pour produire des corps tridimensionnels constitués d'un grand nombre de couches pouvant être mutuellement reliées constituées d'un matériau de construction en forme de particules, par exemple une poudre, et où les informations concernant chaque aspect d'une couche sont obtenues à partir d'un original, par exemple à partir d'une unité de CAO ou similaire, dans lequel un dispositif de dispersion (3) est agencé pour répartir une couche de particules sensiblement régulière (7) sur une base de support (6), **caractérisé en ce qu'**un développeur (11) est agencé pour produire ou appliquer un motif de masquage conformément à l'original, par exemple des informations provenant d'une unité de CAO, sur un dispositif de masquage,
**en ce que** le producteur de rayonnement (8) est agencé sur le dispositif de masquage (9) pour chauffer les particules, qui ne sont pas recouvertes par le motif de masquage et exposées à un rayonnement, et par conséquent les particules sont reliées les unes aux autres par fusion ou frittage, et
**en ce qu'**un dispositif d'élimination (10) est agencé pour enlever le motif de masquage existant du dispositif de masquage (9).

6. Dispositif selon la revendication 5, **caractérisé en ce que** le dispositif de dispersion (3) comporte un rouleau de balayage, un plateau racleur ou similaire, qui est agencé pour transporter les particules depuis un réservoir de poudre (1) et disperser les particules selon une couche régulière sur toute la base de support (6).

7. Dispositif selon la revendication 5, **caractérisé en ce que** le réservoir de poudre (1) est un emballage de transport, qui au moins pendant l'extraction de la poudre est agencé sur la base de support (6), **en ce qu'**au fond de l'emballage est agencée une ouverture de sortie (22) et en liaison avec celle-ci un dispositif de dosage (20) de la poudre, et **en ce que** le dispositif de dispersion (3) et/ou la base de support sont mobiles l'un par rapport à l'autre.

8. Dispositif selon la revendication 5, **caractérisé en ce que** le dispositif de dispersion (3) est un réservoir de poudre mobile respectivement sur la base de support (6) et la couche de poudre (7), qui est agencé pour doser et disperser via au moins une ouverture de sortie (24) une nouvelle couche de poudre dans au moins une direction de déplacement.

9. Dispositif selon la revendication 8, **caractérisé en ce que** l'intérieur du plateau racleur (3) ayant la forme d'un emballage de transport a des parois latérales inclinées vers l'intérieur (23) et **en ce que** des plaques de guidage (25) sont agencées au niveau de l'ouverture de sortie (24) du plateau racleur dans la direction de déplacement du plateau, lesquelles plaques de guidage sont agencées pour faire un angle aigu contre la base de support (6) pour comprimer la couche de poudre en liaison avec la dispersion ou après celle-ci.

10. Dispositif selon la revendication 5, **caractérisé en ce que** la couche de poudre (7) et la plaque de compression (21) sont agencées de manière mobile l'une par rapport à l'autre et agencées pour être appuyées en contact l'une avec l'autre.

11. Dispositif selon la revendication 10, **caractérisé en ce que** la plaque de compression (21) est agencée sous la forme d'un élément de refroidissement destiné à refroidir la couche de poudre (7).

12. Dispositif selon la revendication 5, **caractérisé en ce que** le dispositif de dispersion (3) est un rouleau de poudre rotatif mobile sur la couche de poudre (7), dont la vitesse et le sens de rotation peuvent être ajustés.

13. Dispositif selon la revendication 6, **caractérisé en ce que** le réservoir de poudre (1) est muni d'une base mobile vers le haut et vers le bas (2), qui, lors de la production de chaque couche est agencée pour lever la masse de poudre (4) située dans le réservoir de poudre en correspondance avec l'épaisseur ou le volume d'une couche, et **en ce que** la base de support (6) est un fond mobile vers le haut et vers le bas d'un réservoir de construction (5), qui lors de la production de chaque couche est agencée pour abaisser le fond (4) du réservoir de construction en correspondance avec l'épaisseur ou le volume d'une couche.

14. Dispositif selon la revendication 13, **caractérisé en ce que** les parois du réservoir de construction (5) sont constituées d'une poudre fondue ou frittée, couche par couche, de la même manière que le corps tridimensionnel (19), **en ce que** les parois sont fixées sur la plaque de base mobile (6), et **en ce que** les parois du réservoir de construction (5) sont produites par un motif transparent aux rayons IR commandé par un dispositif fixe ou par l'intermédiaire d'un dispositif de masquage.

15. Dispositif selon la revendication 5, **caractérisé en ce que** le producteur de rayonnement (8) comporte un collimateur (16), qui est constitué de lamelles situées de préférence l'une au-dessus de l'autre dans au moins deux plans différents se recoupant, alternativement en combinaison avec un dispositif de dispersion (15).

16. Procédé selon la revendication 1, **caractérisé en ce que** la poudre est préchauffée à une température qui est plus basse que la température de frittage ou de fusion.

17. Procédé selon la revendication 16, **caractérisé en ce que** la poudre est préchauffée à l'aide d'un élément de rayonnement infrarouge (14) ayant une intensité plus faible que pendant un frittage.

18. Procédé selon la revendication 17, **caractérisé en ce que** la poudre est préchauffée par l'intermédiaire de l'utilisation d'une couche de masquage qui est partiellement transparente.

19. Dispositif selon la revendication 5, **caractérisé en ce que** le dispositif comporte une couche de masquage partiellement transparente.

20. Dispositif selon la revendication 5, **caractérisé en ce que** le dispositif de masquage (9) comporte une unité d'écriture, un développeur, et un affichage à cristaux liquides ou similaire pour la production du motif de masquage voulu.

21. Dispositif selon la revendication 5, **caractérisé en ce que** le dispositif de masquage (9) est un miroir pouvant être connecté et déconnecté, qui est conçu pour prendre en même temps deux états différents, un premier dans lequel le miroir est réfléchissant et un autre dans lequel il est transparent, et **en ce que** lesdits états peuvent être commandés à l'aide d'informations provenant d'une unité de CAO en correspondance avec un motif de masquage voulu.

22. Utilisation d'un matériau de construction dans le procédé selon la revendication 1 et/ou le dispositif selon la revendication 5, dans laquelle le matériau de construction pendant un frittage ou une fusion ou un durcissement est agencé pour se dilater par exemple à l'aide d'un agent de dilatation qui est établi sans gaz, et compense ainsi le rétreint thermique ou chimique résultant du corps tridimensionnel (19).

23. Utilisation d'un matériau de construction dans le procédé de la revendication 1 et/ou le dispositif de la revendication 5, dans laquelle le matériau de construction est constitué d'un noyau de particules, en fibre ou en forme de bille, ayant une température de fusion plus élevée que sa surface, qui est recouvert à l'aide d'une mince couche fondue ou pouvant durcir.

24. Dispositif selon la revendication 5, **caractérisé en ce que** le développeur (11) est agencé pour coopérer avec une plaque transparente (9), sur laquelle une couche de poudre de masquage est appliquée électrostatiquement.

25. Dispositif selon la revendication 5, **caractérisé en ce que** le développeur (11) est constitué d'une matrice d'électrodes agencée dans ou sur une plaque transparente (9), ayant un grand nombre d'électrodes de commande de préférence de forme annulaire, laquelle matrice d'électrodes sur un premier côté est muni d'un électrode d'arrière-plan et dont le côté opposé est tourné en direction d'un dispositif de dosage de matériau de masquage, et **en ce que** les potentiels appliqués sur les électrodes de commande sont variables conformément aux informations provenant de l'unité de CAO.

26. Dispositif selon la revendication 5, **caractérisé en ce que** le dispositif d'élimination (3) est un dispositif de nettoyage, qui est agencé pour nettoyer la couche transparente du matériau de masquage formant la couche de masquage, de sorte que du matériau en excès possible va de préférence être renvoyé vers le dispositif de masquage.

27. Dispositif selon la revendication 26, **caractérisé en ce que** le dispositif d'élimination (10) est agencé pour changer l'état de la tension de l'affichage de sorte que le motif de masquage est effacé.

28. Utilisation d'un matériau de construction dans le procédé de la revendication 1 et/ou le dispositif de la revendication 5, dans laquelle le matériau de construction est constitué d'un matériau fondu en forme de grains et/ou frittable, par exemple une matière thermoplastique telle que du Nylon, muni d'une poudre de pigment à base de carbone ayant une absorption élevée dans la plage des infrarouges (IR).

29. Utilisation d'un matériau de construction dans le procédé de la revendication 1 et/ou le dispositif de la revendication 5, dans laquelle le matériau de construction a une grande proportion de groupes OH polaires ou de doubles liaisons dans les chaînes moléculaires.

30. Utilisation d'un matériau de masquage dans le procédé de la revendication 1 et/ou le dispositif de la revendication 5, dans laquelle le matériau de masquage est constitué d'une poudre de masquage, d'oxyde d'aluminium par exemple, ayant une température de fusion élevée et un degré de réflexion élevé.
